# EUROPÄISCHE PATENTSCHRIFT

(11) **EP 2 110 340 B1**
(45) Veröffentlichungstag und Bekanntmachung des Hinweises auf die Patenterteilung: **23.06.2010**
(21) Anmeldenummer: 08007265.5
(22) Anmeldetag: 14.04.2008
(51) Int. Cl.: B65G 17/00, B65G 35/06, B65G 63/02, B60P 1/36

(54) **Fahrzeugantriebssystem**
Vehicle drive system
Système d'entraînement d'un véhicule

(43) Veröffentlichungstag der Anmeldung: 21.10.2009
(73) Patentinhaber: SIEMENS AKTIENGESELLSCHAFT, 80333 München (DE)
(72) Erfinder: Hamann, Jens, 90765 Fürth (DE); Ladra, Uwe, 91056 Erlangen (DE); Recktenwald, Alois, 91074 Herzogenaurach (DE); Stoiber, Dietmar, 90763 Fürth (DE)

(56) Entgegenhaltungen:
- EP-A- 1 884 487

## Beschreibung

Die Erfindung betrifft ein Fahrzeugantriebssystem nach dem Oberbegriff des Anspruchs 1.

Insbesondere bei Containerhafenanlagen besteht das Bedürfnis nach Antriebssystemen, mit denen große Lasten schnell bewegt werden können, um auf diese Weise Umschlagszeiten für in Containern transportieren Gütern zu minimieren. Bisherige Rad-Sehiene-Systeme können diese Anforderungen speziell bei sehr großen Contalnerhafenanlagen aufgrund verhältnismäßig geringer maximaler Beschleunigung im Bereich von ca. 0,4 m/s² und sich daraus ergebender langer Transportzeiten nur ansatzweise erfüllen. Deutlich bessere Beschleunigungswerte und höhere Geschwindigkeiten bieten in W.-R. Canders et al. "Linear Motor Transfer Technology (LMTT) for Container Terminals" LDIA '98 Tokyo, Japan beschriebene Linearmotorsysteme.

Aus DE 10 2004 019 922 A1 ist ein Fördersystem bekannt, das eine Antriebseinheit mit einer Kette, Zahnrädern und einer Bremseinheit umfaßt. In EP 0 247 524 A1 ist eine Antriebseinheit beschrieben, die eine Antriebskette und dieser zugeordnete Zahnräder aufweist. EP 0 416 446 A1 und FR 2 228 012 A1 offenbaren Antriebssysteme mit zwei Antriebseinheiten mit Ketten bzw. Riemen.

In US 2006/113168 A1 ist ein Fahrzeugantriebssystem mit einer entlang eines Fahrweges umlaufend beweglichen Antriebskette und einer an einem Fahrzeug vorgesehenen Antriebseinheit offenbart, Die Antriebseinheit weist ein in die Antriebskette greifendes Zahnrad und eine auf das Zahnrad einwirkende Bremseinrichtung auf.

Aus EP 1 884 487 A1 ist ein Fahrzeugantriebssystem mit einer entlang eines Fahrweges beweglichen Antriebskette und einer an einem Fahrzeug vorgesehenen ersten Antriebseinheit bekannt. Die.Antriebseinheit umfaßt ein in die Antriebskette greifendes Zahnrad und eine auf das Zahnrad einwirkende Bremseinrichtung. Die Antriebskette ist entlang eines zweiten im wesentlichen parallelen Fahrweges umlaufend beweglich. Außerdem ist am Fahrzeug eine zweite Antriebseinheit vorgesehen, deren Zahnrad in eine zweite entlang des Fahrweges gegeläufig bewegliche Antriebskette greift. EP 1 884 487 entspricht den Merkmalendes Oberbegriffs des Anspruchs 1.

In DE 10 2006 036357 A1 ist ein Fahrzeugantriebssystem mit einer entlang einer ersten seitlichen Begrenzung eines Fahrweges beweglichen ersten umlaufenden Antriebskette und einer entlang einer zweiten seitlichen Begrenzung des Fahrweges beweglichen zweiten umlaufenden Antriebskette beschrieben. Am Fahrzeug ist zumindest eine erste Antriebseinheit vorgesehen. Die erste Antriebseinheit umfaßt ein erstes Zahnrad zum Eingriff in einen sich in eine erste Richtung bewegenden Abschnitt der ersten Antriebskette. Außerdem weist die erste Antriebseinheit ein zweites Zahnrad zum Eingriff in einen sich in eine zur ersten Richtung entgegengesetzte zweite Richtung bewegenden Abschnitt der ersten Antriebskette (21) sowie eine auf das erste und/oder zweite Zahnrad einwirkende Bremseinrichtung auf. Am Fahrzeug ist außerdem zumindest eine zweite Antriebseinheit vorgesehen. Die zweite Antriebseinheit umfaßt ein drittes Zahnrad zum Eingriff in einen sich in die erste Richtung bewegenden Abschnitt der zweiten Antriebskette und ein viertes Zahnrad zum Eingriff in einen sich in die zweite Richtung bewegenden Abschnitt der zweiten Antriebskette. Außerdem weist die zweite Antriebseinheit eine auf das dritte und/oder vierte Zahnrad einwirkende Bremseinrichtung auf.

Bei kettenbasierten Fahrzeugantriebssystemen mit Weglängen von mehr als 500 m, beispielsweise in Containerkrananlagen, können umlaufende Antriebsketten Längen von mehr als einem Kilometer erreichen. Derart langen Ketten stellen aufgrund verstärkter Reibung und zunehmenden Verlustes an Steifigkeit eine große Herausforderung dar. Problematisch ist auch eine mögliche Dehnung einer Antriebskette infolge von Temperatureffekten oder auftretenden Zugskräften. Hierdurch kann das dynamische Verhalten eines kettenbasierten Fahrzeugantriebssystems nachteilig beeinflußt. Außerdem ist eine Wartung von sehr langen Ketten äußerst aufwendig.

Ausgehend vom bekannten Stand der Technik liegt der vorliegenden Erfindung die Aufgabe zugrunde, ein kostengünstiges, wartungsfreundliches Fahrzeugantriebssystem anzugeben, das einen zuverlässigen und schnellen Transport schwerer Lasten ermöglicht.

Diese Aufgabe wird erfindungsgemäß durch ein Fahrzeugentriebssystem mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Fahrzeugantriebsystem weist zumindest eine entlang eines ersten Fahrwegabschnitts umlaufend bewegliche Antriebskette und eine an einem Fahrzeug vorgesehene erste Antriebseinheit mit einem in einen ersten Antriebskettenabschnitt greifenden Zahnrad und einer auf das Zahnrad einwirkenden Bremseinrichtung auf. Außerdem ist am Fahrzeug eine zweite Antriebseinheit vorgesehen, deren Zahnrad in einen entlang des ersten Fahrwegabschnitts zum ersten Antriebskettenabschnitt gegenläufig beweglichen zweiten Antriebskettenabschnitt greift. Ein wesentlicher Aspekt der vorliegenden Erfindung liegt darin, daß zumindest eine weitere entlang eines zweiten Fahrwegabschnitts umlaufend bewegliche Antriebskette vorgesehen ist, und daß die zumindest eine weitere Antriebskette in einem Übergangsbereich von erstem und zweitem Fahrwegabschnitt überlappend zu der zumindest einen entlang des ersten Fahrwegabschnitts beweglichen Antriebskette verläuft. Die erste Antriebseinheit weist ein Zahnrad auf, das in einen der zumindest einen weiteren Antriebskette zugeordneten dritten Antriebskettenabschnitt greift. Die zweite Antriebseinheit weist ein Zahnrad auf, das in einen entlang des zweiten Fahrwegabschnitts zum dritten Antriebskettenabschnitt gegenläufig beweglichen vierten Antriebskettenabschnitt greift.

Durch eine Ersetzung einer sehr langen Antriebskette durch mehrere kürzere Antriebsketten, die abschnittsweise Antriebsfunktionen wahrnehmen, können grundsätzlich sämtliche Vorteile eines Fahrzeugantriebssystems mit einer umlaufenden Antriebskette genutzt werden, ohne jedoch deren Nachteile bei sehr großen Kettenlängen in Kauf nehmen zu müssen. Die Länge der abschnittsweise verwendeten Antriebsketten kann entsprechend anwendungsspezifischen Randbedingungen gewählt werden. Einflußfaktoren hierbei sind Bauart und Masse der Antriebsketten, Masse des anzutreibenden Fahrzeugs sowie Anforderungen an Beschleunigung und Geschwindigkeit einschließlich daraus resultierender Kräfte, welche die Antriebsketten übertragen.

Die erste Antriebseinheit kann zwei auf einer Achse angeordnete Zahnräder zum Eingriff in den ersten und den dritten Antriebskettenabschnitt aufweisen, während die zweite Antriebseinheit zwei auf einer Achse angeordnete Zahnräder zum Eingriff in den zweiten und den vierten Antriebskettenabschnitt aufweisen kann. Alternativ dazu kann die erste Antriebseinheit ein zum Eingriff in den ersten und den dritten Antriebskettenabschnitt axial verschiebbares Zahnrad aufweisen, während die zweite Antriebseinheit ein zum Eingriff in den zweiten und den vierten Antriebskettenabschnitt axial verschiebbares Zahnrad aufweisen kann.

Entsprechend einer Ausgestaltung der vorliegenden Erfindung sind der erste und der zweite Antriebskettenabschnitt einer ersten Antriebskette zugeordnet, während der dritte und der vierte Antriebskettenabschnitt einer zweiten Antriebskette zugeordnet sind. Alternativ dazu ist es möglich, daß der erste Antriebskettenabschnitt einer ersten Antriebskette zugeordnet ist, der zweite Antriebskettenabschnitt einer zweiten Antriebskette zugeordnet ist, der dritte Antriebskettenabschnitt einer dritten Antriebskette zugeordnet ist und der vierte Antriebskettenabschnitt einer vierten Antriebskette zugeordnet ist.

Die die umlaufenden Antriebsketten können sich über jeweils eine zur Fahrwegebene parallele Ebene erstrecken oder entsprechend einer anderen Ausführungsform der vorliegenden Erfindung über jeweils eine zur Fahrwegebene senkrechte Ebene.

Eine Bremseinrichtung kann entweder als Wirbelstrombremse oder als in ein Stromnetz und/oder Batteriesystem zurückspeisender Gleichstrom-, Wechselstrom oder Drehstrommotor ausgestaltet sein. Auch eine Kombination aus Wirbelstrombremse und zusätzlichem elektrischen Generator zur Versorgung elektrischer Verbraucher im Fahrzeug ist möglich. Eine Verwendung eines generatorisch betreibbaren Elektromotors als Bremseinrichtung bietet den Vorteil einer Energierückgewinnung anstelle einer Umsetzung von kinetischer Energie in thermische Energie wie bei herkömmlichen Bremseinrichtungen.

Zur bedarfsgerechten Regelung von Beschleunigung und Verzögerung ist eine Bremseinrichtung hinsichtlich ihres Bremsmoments vorzugsweise zwischen Leerlauf und vollem Bremsmoment stufenlos regulierbar.

Die Erfindung wird nachfolgend an einem Ausführungsbeispiel anhand der Zeichnung näher erläutert. Es zeigt
- Figur 1: ein schematisch dargestelltes Fahrzeugantriebssy- stem nach dem Stand der Technik in der Draufsicht,
- Figur: 2 ein schematisch dargestelltes Fahrzeugantriebssy- stem entsprechend der vorliegenden Erfindung in der Draufsicht,
- Figur 3: eine Detaildarstellung einer in Figur 2 dargestell- ten Antriebskette sowie eines Zahnrads einer Ket- tenantriebseinheit und eines Zahnrads einer Fahr- zeugantriebseinheit.

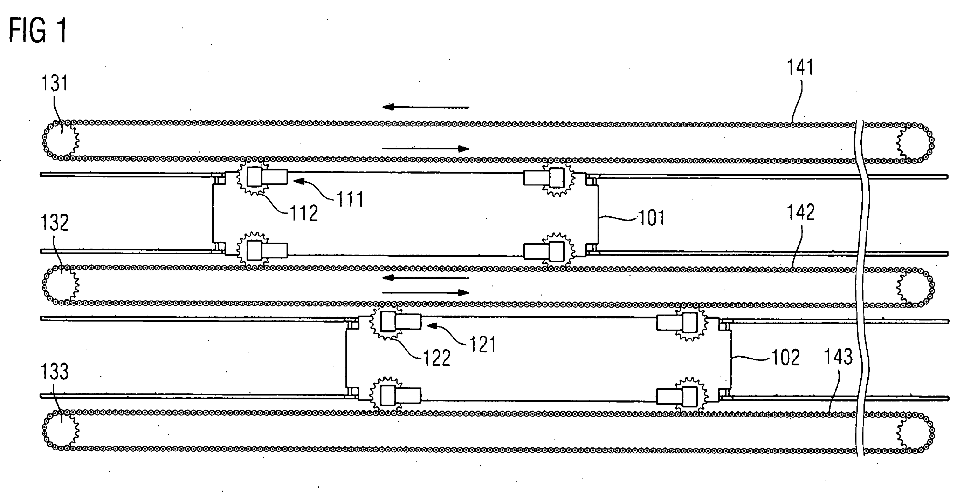

Ein in Figur 1 dargestelltes Fahrzeug 101, 102 wird über umlaufende mechanische Ketten 141 - 143 angetrieben. Dabei läuft an einer Längsseite des Fahrzeugs 101, 102 die Kette 141 - 143 in einer ersten Richtung und an der gegenüberliegenden Längsseite des Fahrzeugs 101, 102 eine weitere Kette 141 - 143 bzw. ein anderer Abschnitt derselben Kette 141 - 143 in einer zweiten entgegensetzten Richtung. Die umlaufenden Ketten werden 141 - 143 von zentralen Antriebseinheiten 131 - 133 auf konstanter Umlaufgeschwindigkeit gehalten. Diese konstante Umlaufgeschwindigkeit kann beispielsweise so groß sein wie die zu erreichende Endgeschwindigkeit eines Fahrzeugs 101, 102.

An jeden Fahrzeug 101, 102 ist im vorliegenden Beispiel mindestens eine Bremseinrichtung 111, 121 vorgesehen, die mittels eines Ritzels 112, 122 in die umlaufenden Kette 141 - 143 greift. Das Ritzel 112, 122 ist an eine Bremseinheit gekoppelt. Das Bremsmoment der Bremseinheit kann zwischen Leerlauf - kein Bremsmoment - und dem vollem Bremsmoment - Blockieren des Ritzels 112, 122 - stufenlos variiert werden. Das Bremsmoment kann dabei einem vorgegebenen Sollwert folgen.

Im Leerlauf läuft die Kette 141 - 143 frei am Fahrzeug 101, 102 vorbei, und es wird keine Kraft von der Kette 141-143 auf das Fahrzeug übertragen. Das Fahrzeugs 101, 102 befindet sich beispielsweise während des Stillstandes im Leerlauf. Soll das Fahrzeug 101, 102 in Bewegung gesetzt werden, so wird am Ritzel 112, 122 ein Bremsmoment vorgegeben. Entsprechend dem wirksamen Durchmesser des Ritzels 112, 122 wird dadurch eine Vortriebskraft von der umlaufenden Kette 141 - 143 auf das Fahrzeug 101, 102 übertragen. Die Mitnehmerkraft einer Bremseinheit ergibt sich aus dem Quotienten von Bremsmoment und wirksamem Radius des Ritzels 112, 122. An einem Fahrzeug 101, 102 können mehrere Bremseinheiten angebracht sein. Da je eine Längsseite des Fahrzeugs 101, 102 für eine Fahrtrichtung zuständig ist, ergibt sich die gesamte Vorschubkraft aus der Summe der Vorschubkräfte der Bremseinheiten an der entsprechenden Längsseite. Während das Fahrzeug 101, 102 durch die Mitnehmerkraft beschleunigt wird, verringert sich die Relativgeschwindigkeit zwischen Kette 141 - 143 und Fahrzeug 101, 102. Wenn die Drehung des Ritzels 112, 122 vollstandig abgebremst ist, dann läuft das Fahrzeug 101, 102 synchron zur Umlaufkette 141 - 143.

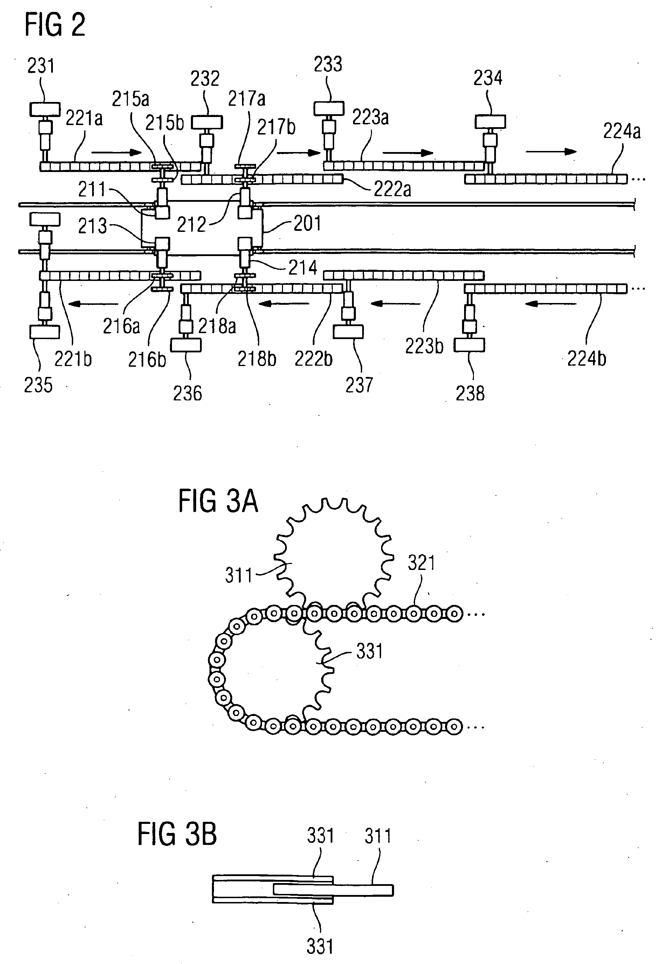

Das in Figur 2 dargestellte Fahrzeugantriebssystem entspricht in seiner grundsätzlichen Funktionsweise dem Fahrzeugantriebssystem gemäß Figur 1. Jedoch weist das in Figur 2 dargestellte Fahrzeugantriebssystem gegenüber dem Fahrzeugentriebssystem gemäß Figur 1 die nachfolgend beschriebenen Unterschiede auf.

Das Fahrzeugantriebssystem gemäß Figur 2 weist zwei entlang eines ersten fahrwegabschnitts umlaufend beweglichen Antriebsketten 221a, 221b auf, die ein erstes Antriebskettenpaar bilden. Wie durch in Figur 2 durch Laufrichtungspfeile angedeutet, weisen die beiden Antriebsketten 221a, 221b einen gegenläufigen Umlaufsinn auf. Am anzutreibenden Fahrzeug 201 sind im vorliegenden Ausführungsbeispiel insgesamt vier Antriebseinheiten 211 - 214 vorgesehen, die jeweils ein in eine der beiden Antriebsketten 221a, 221b des ersten Fahrwegabschnitts greifendes Ritzel 215a - 218a und jeweils eine auf die Ritzel über eine Welle einwirkende Bremseinrichtung aufweisen. Bei dem in Figur 2 dargestellten Fahrzeugantriebssystem erstrecken sich die umlaufenden Antriebsketten über jeweils eine zur Fahrwegebene senkrechte Ebene.

Entlang eines zweiten, dritten und vierten Fahrwegabschnitts sind ein zweites, drittes und viertes Antriebskettenpaar vorgesehen. Jedes dieser Antriebskettenpaare umfaßt jeweils zwei umlaufend bewegliche Antriebsketten 222ä, 222b, 223a, 223b, 2224a, 224b, die wie beim ersten Antriebskettenpaar einen gegenläufigen Umlaufsinn aufweisen. In einem Übergangsbereich von einem Fahrwegabschnitt und einem nachfolgenden Fahrwegabschnitt sind die Antriebskettenpaare jeweils überlappend und axial versetzt zum Antriebskettenpaar des nachfolgenden Fahrwegabschnitts angeordnet. Damit die Antriebseinheiten 211 - 214 bei einem Fahrwegabschnittswechsel eine Verbindung sowohl zu den Antriebsketten des vorangehenden als auch zu den Antriebsketten des nachfolgenden Fahrwegabschnitts aufweisen, umfaßt im vorliegenden Ausführungsbeispiel jede Antriebseinheit 211 - 214 zwei auf einer Welle angeordnete, axial versetzte Ritzel 215a, 215b, 216a, 216b, 217a, 217b, 218a, 218b zum Eingriff in die jeweiligen Antriebskettenpaare. Die Ritzel 215a - 218a können dabei in Eingriff mit den Antriebsketten 221a, 221b, 223a, 223b der ungeraden Fahrwegsabschnitte gebracht werden, während die Ritzel 215b - 218b in Eingriff mit den Antriebsketten 222a, 222b, 224a, 224b der geraden Fahrwegsabschnitte gebracht werden können. Die Antriebsketten werden von Kettenantriebseinheiten 231 - 238 auf im wesentlichen konstanter Umlaufgeschwindigkeit gehalten.

Dadurch daß sich die Antriebsketten benachbarter Fahrwegsabschnitte in den jeweiligen Überqangsbereichen überlappen und in den Übergangsbereichen beide Ritzel einer Antriebseinheit in Eingriff mit den Antriebsketten des vorangehenden und des nachfolgenden Fahrwegabschnitts stehen, ergibt sich im wesentlichen eine doppelte Steifigkeit bei einer Umsetzung von Rotation in Translation. Für einen ruckfreien Antrieb sollten sämtliche Antriebsketten des in Figur 2 dargestellten Fahraeugantriebssystems synchron laufen. Das kann mit einer mechanischen oder elektrischen Kopplung der Antriebsketten erreicht werden. Eine mechanische Kopplung ist mit Kardanwellen realisierbar. Zur Vermeidung eines großen mechanischen Aufwandes sind die Antriebsketten jedoch vorzugsweise elektrisch zu koppeln, um einen Gleichlauf sicherzustellen.

Wenn ein Fahrzeug mit Hilfe des in Figur 2 dargestellten Fahrzeugantriebssystems angetrieben werden soll, werden freilaufende Ritzel der jeweiligen Antriebseinheit gebremst. Dabei wird die jeweilige Antriebskette mit einem Lastmoment beaufschlagt, wodurch es zu Drehzahlschwankungen kommen kann. Um jedoch die Drehzahl stabil zu halten, werden vorzugsweise mit Kettenantriebsmotoren verbundene Schwungräder verwendet. Damit können die Schwankungen des Lastmomentes beim Einkoppeln und Auskoppeln eines Fahrzeugs in die Antriebsketten eines Fahrwegabschnitts minimiert werden. Die Größe der Schwungräder sollte entsprechend der Größe zulässiger Drehmomentschwankungen dimensioniert werden. Die Drehmomentschwankungen sind wiederum abhängig vom Übersetzungsverhältnis zwischen Ritzel und Antriebskette, von der Fahrzeugbeschleunigung und der Masse des anzutreibenden Fahrzeugs.

In Figur 3 sind eine Antriebskette 321, ein Zahnrad 331 einer Kettenantriebseinheit und ein Ritzel 311 einer Fahrzeugantriebseinheit in einem Übergangsbereich von zwei Fahrwegabschnitten im Detail in Seitenansicht und Draufsicht dargestellt. Bei einer Fahrzeugbewegung über einzelne Fahrwegabschnitte hinweg sollte vermieden werden, daß ein Ritzel 311 einer Fahrzeugantriebseinheit direkt auf ein Zahnrad 331 einer Kettenantriebseinheit trifft. Hierzu kann beispielsweise das Zahnrad 331 axial unterteilt werden, wobei zwischen beiden Teilen eine Distanzhülse angeordnet wird. Im Bereich der Distanzhülse kann sich das Ritzel 311 der Fahrzeugantriebseinheit bewegen, ohne mit einem Zahnrad einer Kettenantriebseinheit in Kontakt zu treten.

Es ist möglich, das Drehmoment, das von der Bremseinheit erzeugt wird, mittels Getriebe auf das Ritzel anzupassen. Insbesondere bei der Verwendung von generatorisch oder magnetisch wirkenden Bremseinheiten kann dies sinnvoll sein.

Die Beschleunigung des Fahrzeugs kann über das Bremsmoment der Bremseinrichtungen vorgegeben werden. Sofern die Ritzel formschlüssig in die Kette eingreifen, sind wesentlich höhere Beschleunigungen als mit Rad-Schiene-Systemen möglich.

Soll das Fahrzeug verzögert werden, so kann Bremsmoment auf diejenigen Ritzel vorgegeben werden, die in die Umlauf kette entgegen der Fahrtrichtung eingreifen. Auf diese Wiese ist es möglich, durch entsprechend dosierte vorgabe von Bremsmomenten, das Fahrzeug an einer gewünschten Position zum stehen zu bringen. Ist die gewünschte Position erreicht, kann das Fahrzeug durch Blockieren von Tragrädern in der jeweiligen Position gehalten werden. Das Verzögern des Fahrzeugs durch Eingriff in eine Gegenkette ermöglicht höhere Verzögerungswerte als dies reibungsgebundene Rad-Schiene-System zulassen würden.

Zu Begin einer Beschleunigungsphase ist die Bremsleistung groß, weil die Drehzahl des Ritzels groß ist. Gegen Ende des Beschleunigungsphase ist die Bremsleistung gering, weil die Drehzahl des Ritzels gering ist. Da die Bremsleistung zeitweise recht große Werte annehmen kann, erweist es sich als vorteilhaft, als Bremseinheit eine rückspeisefähige Einheit vorzusehen. Wird auf die Rückspeisefähigkeit verzichtet, dann vereinfacht sich der Aufwand. Die einzelnen Anwendungsszenarien werden nachfolgend vorgestellt.

### Bremseinheit mit passiver mechanischer Bremse ohne Rückspeisung

Die Leistungen einer Bremseinheit während des Beschleunigungsvorgangs sind vergleichbar mit Bremsleistungen von Lastkraftwagen. Daher könnte als Bremseinheit eine LKW-Bremse verwendet werden, die beispielsweise pneumatisch oder hydraulisch angesteuert wird. Im Gegensatz zum Sicherheitskonzept bei LKWs ist aber der sichere Zustand nicht die Blockierung sondern die Öffnung der Bremse, weil bei blockierter Bremseinheit der Fahrzeug synchron zur Umlaufkette mitgezogen wird.

Die LKW-Bremse speist keine Energie zurück. Wenn dennoch elektrische Energie, beispielsweise für die Hilfs- und Steuerungsfunktionen, im oder auf dem Fahrzeug zur Verfügung stehen soll, dann können zusätzlich kleinere Generatoreinheiten am Fahrzeug angebracht sein, die bei vorhandener Relativgeschwindigkeit zwischen Umlaufkette und Fahrzeug über das Ritzel angetrieben werden. Wird das generatorische Drehmoment gleichmäßig auf zwei entlang eines Fahrweges zueinander gegenläufige Kette aufgeteilt, dann verschwindet die Kraftwirkung auf den Fahrzeug und stört die Positionierung nicht.

Anstelle von LKW-Bremseinheiten können auch Wirbelstrombremseinheiten mit mechanisch oder elektrisch steuerbarem Bremsmagnetfeld eingesetzt werden. Eine Wirbelstrombremseinheit mit elektrisch steuerbarem Bremsmagnetfeld kann beispielsweise ein Norm-Asynchronmotor sein, der mittels Gleichstrom erregt wird. Die Schlupfkennlinie eines solchen Norm-Asynchronmotors läßt sich dann mittels Getriebe an das erforderliche Drehmoment des Mitnehmerritzels anpassen.

### Bremseinheit mit aktiver Rückspeisung über Drehstrommotoren

Als Bremseinheiten können bürstenlose Drehstrommotoren eingesetzt werden. Das Motormoment kann auch hier mittels Getriebe an das erforderlich Drehmoment des Ritzels angepaßt werden. Beim Bremsen wird die Energie in einen Gleichspannungszwischenkreis zurückgespeist. Damit die Zwischenkreisspannung während des Bremsens konstant bleibt, sollte der Gleichspannungszwischenkreis batteriegestützt sein.

Da beim Beschleunigen und Verzögern des Fahrzeugs stets Energie zurückgespeist wird, sollte drauf geachtet werden, daß die Energiebilanz des batteriegestützten Gleichspannunqszwischenkreises ausgeglichen ist. Gegebenenfalls sollte überschüssige Energie wieder aus dem Zwischenkreis entnommen werden. Dies kann beispielsweise beim Stillstand des Fahrzeugs geschehen, Im Fahrzeugstillstand können die Bremseinheiten motorisch betrieben werden. Wenn das Moment gleichmäßig auf die beiden gegenläufigen Ketten verteilt wird, hebt sich die Kraftwirkung auf das Fahrzeug auf und beeinträchtigt nicht die Genauigkeit der Positionierung. Die Kette wird die zugeführte mechanische Energie dann an die zentralen Antriebseinheiten abgeben, wobei die Motoren der zentralen Antriebseinheiten die Energie generatorisch in ein Stromnetz zurückspeisen.

Ein Ausgleich der Zwischenkreis-Energiebilanz kann auch dadurch erfolgen, daß die Kette mit geringerer Geschwindigkeit umläuft, als für die Endgeschwindigkeit der Fahrzeugs vorgesehen ist. In einer ersten Beschleunigungsphase wird das Fahrzeug durch Bremsen des Ritzels und Mitziehen auf die Geschwindigkeit der Kette beschleunigt. In einer zweiten Phase werden die Bremseinheiten motorisch betrieben, so daß das Fahrzeug gegenüber der Kette beschleunigt wird und eine höhere Geschwindigkeit als die der Kette annimmt.

Als Motoren für die aktive Rückspeisung mit Drehstrommotoren kommen grundsätzlich sowohl Synchron- als auch Asynchronmotoren in Frage.

### Bremseinheit mit aktiver Rückspeisung über Gleichstrommotoren

Beim Bremsen mit Drehstrombremseinheiten sind erforderliche Umrichter grundsätzlich für eine der Antriebsleistung des Fahrzeugs entsprechende Leistung auszulegen. Für typische Anwendungsfälle können dies mehrere 100 kW sein. Die Umrichterleistung kann verkleinert werden, indem ein fremderregter Gleichstrommotor für die Bremseinheit verwendet wird. Durch Ansteuerung der Erregerwicklung läßt sich ein gewünschtes Bremsmoment einstellen. Im Vergleich zur Antriebsleistung ist dann zum Ansteuern der Erregerwicklung nur ein Bruchteil der Leistung notwendig.

Die Motorwicklung kann an einen Zwischenkreis geschaltet sein und Strom in diesen zurückspeisen. Im Leerlauf - Stillstand des Fahrzeugs - kann die Motorwicklung vom Zwischenkreis getrennt werden.

## Patentansprüche

1. Fahrzeugantriebssystem mit
- zumindest einer entlang eines ersten Fahrwegabschnitts umlaufend beweglichen Antriebskette (221a-221b, 222a-222b),
- einer an einem Fahrzeug vorgesehenen ersten Antriebseinheit (211) mit einem in einen ersten Antriebskettenabschnitt (211a) greifenden Zahnrad (215a) und einer auf das Zahnrad (215a) einwirkenden Bremseinrichtung (111, 121),
- einer am Fahrzeug vorgesehenen zweiten Antriebseinheit (213), deren Zahnrad (216a) in einen entlang des ersten Fahrwegabschnitts zum ersten Antriebskettenabschnitt gegenläufig beweglichen zweiten Antriebskettenabschnitt (221b) greift,
**dadurch gekennzeichnet, daß**
- zumindest eine weitere entlang eines zweiten FahrwegabSchnitts umlaufend bewegliche Antriebskette (222a-222b) vorgesehen ist,
- die zumindest eine weitere Antriebskette (222a-222b) in einem Übergangsbereich.von erstem und zweitem Fahrwegabschnitt überlappend zu der zumindest einen entlang des ersten Fahrwegabschnitts beweglichen Antriebskette (222a-222b) verläuft,
- die erste Antriebseinheit (211) ein Zahnrad (215b) aufweist, das in einen der zumindest einen weiteren Antriebskette (222a-222b) zugeordneten dritten Antriebskettenabschnitt (222a) greift,
- die zweite Antriebseinheit (213) ein Zahnrad (216b) aufweist, das in einen entlang des zweiten Fahrwegabschnitts zum dritten Antriebskettenabschnitt (222a) gegenläufig beweglichen vierten Antriebskettenabschnitt (222b) greift.

2. Fahrzeugantriebssystem nach Anspruch 1, bei dem die erste Antriebseinheit (211) zwei auf einer Achse angeordnete Zahnräder (215a, 215b) zum Eingriff in den ersten und den dritten Antriebskettenabschnitt (221a, 222a) aufweist und die zweite Antriebseinheit zwei auf einer Achse angeordnete Zahnräder (216a, 216b) zum Eingriff in den zweiten und den vierten Antriebskettenabschnitt (221b, 222b) aufweist.

3. Fahrzeugantriebssystem nach Anspruch 1, bei dem die erste Antriebseinheit (211) ein zum Eingriff in den ersten und den dritten Antriebskettenabschnitt (221a, 222a) axial verschiebbares Zahnrad (215a, 215b) aufweist und die zweite Antriebseinhet (213) ein zum Eingriff in den zweiten und den vierten Antriebskettenabschnitt (221b, 222b) axial verschiebbares Zahnrad (216a, 216b) aufweist.

4. Fahrzeugantriebssystem nach einem der Ansprüche bis 3, bei dem der erste und der zweite Antriebskettenabschnitt (221a, 221b) einer ersten Antriebskette (221a, 221b) zugeordnet sind und der dritte und der vierte Antriebskettenabschnitt (222a, 222b) einer zweiten Antriebskette (222a, 222b) zugeordnet sind.

5. Fahrzeugantriebssystem nach einem der Ansprüche 1 bis 3, bei dem der ersten Antriebskettenabschnitt (221a) einer ersten Antriebskette zugeordnet ist, der zweite Antriebskettenabschnitt (221b) einer zweiten Antriebskette zugeordnet ist, der dritte Antriebskettenabschnitt (222a) einer dritten Antriebskette zugeordnet ist und der vierte Antriebskettenabschnitt (222b) einer vierten Antriebskette zugeordnet ist.

6. Fahrzeugantriebssystem nach einem der Ansprüche 1 bis 5, bei dem sich die umlaufenden Antriebsketten (221a, 221b, 222a, 222b) über jeweils eine zur Fahrwegebene parallele Ebene erstrecken.

7. Fahrzeugantriebssystem nach einem der Ansprüche 1 bis 5, bei dem sich die umlaufenden Antriebsketten (221a, 221b, 222a, 222b) über jeweils eine zur Fahrwegebene senkrechte Ebene erstrecken.

8. Fahrzeugantriebssystem nach einem der Ansprüche 1 bis 7, bei dem
die umlaufenden Antriebsketten (221a, 221b, 222a, 222b) synchron zueinander betrieben sind.

9. Fahrzeugantriebssystem nach einem der Ansprüche 1 bis 8, bei dem
zwei sich überlappende umlaufende Antriebsketten (221a, 222a) über Kardanwellen gekoppelt sind.

10. Fahrzeugantriebssystem nach einem der Ansprüche 1 bis 9, bei dem
zumindest ein mit einem Kettenantriebsmotoren (231-238) verbundenes Schwungrad zum Ausgleich von Lästmomentschwankungen vorgesehen ist.

11. Fahrzeugantriebssystem nach einem der Anspräche 1 bis 10, bei dem
zumindest ein Zahnrad (215a-218b) formschlüssig in eine Antriebskette greift.

12. Fahrzeugantr.iebssystem nach einem der Ansprüche 1 bis 11, bei dem
zumindest eine Bremseinrichtung (111, 121) als Wirbelstrombremse ausgestaltet ist.

13. Fahrzeugantriebssystem nach einem der Ansprüche 1 bis 12, bei dem
zumindest eine Bremseinrichtung (111, 121) als in ein Stromnetz und/oder Batteriesystem zurückspeisender Gleichstrommotor ausgestaltet ist.

14. Fahrzeugantriebssystem nach einem der Ansprüche 1 bis 13, bei dem.
zumindest eine Bremseinrichtung (111, 121) als in ein Stromnetz und/oder Batteriesystem zurückspeisender Drehstrommotor ausgestaltet ist.

15. Fahrzeugantriebssystem nach einem der Ansprüche 1 bis 14, bei dem
zumindest eine Bremseinrichtung (111, 121) hinsichtlich ihres Bremsmoments zwischen Leerlauf und vollem Bremsmoment stufenlos regulierbar ist.

## Claims

1. Vehicle drive system with
- at least one drive chain (221a - 221b, 222a - 222b) which can move in a circulating fashion along a first roadway section,
- a first drive unit (211) which is provided on a vehicle and has a gear wheel (215a) which engages in a first drive chain section (211a), and a brake device (111, 121) which acts on the gear wheel (215a),
- a second drive unit (213) which is provided on the vehicle and the gear wheel (216a) of which engages in a second drive chain section (221b) which can move in the opposite direction to the first drive chain section along the first roadway section,
**characterized in that**
- at least one further drive chain (222a - 222b) which can move in a circulating fashion along a second roadway section is provided,
- the at least one further drive chain (222a - 222b) runs, in an overlapping fashion in a junction region of the first and the second roadway sections, to the at least one drive chain (222a - 222b) which can move along the first roadway section,
- the first drive unit (211) has a gear wheel (215b) which engages in a third drive chain section (222a) which is assigned to the at least one further drive chain (222a - 222b),
- the second drive unit (213) has a gear wheel (216b) which engages in a fourth drive chain section (222b) which can move in the opposite direction to the third drive chain section (222a) along the second roadway section.

2. Vehicle drive system according to Claim 1, in which the first drive unit (211) has two gear wheels (215a, 215b) arranged on an axis for engagement in the first and third drive chain sections (221a, 222a), and the second drive unit has two gear wheels (216a, 216b) arranged on an axis for engagement in the second and fourth drive chain sections (221b, 222b).

3. Vehicle drive system according to Claim 1, in which the first drive unit (211) has a gear wheel (215a, 215b) which can be displaced axially in order to engage in the first and third drive chain sections (221a, 222a), and the second drive unit (213) has a gear wheel (216a, 216b) which can be displaced axially for engagement in the second and fourth drive chain sections (221b, 222b).

4. Vehicle drive system according to one of Claims 1 to 3, in which the first and second drive chain sections (221a, 221b) are assigned to a first drive chain (221a, 221b), and the third and fourth drive chain sections (222a, 222b) are assigned to a second drive chain section (222a, 222b).

5. Vehicle drive system according to one of Claims 1 to 3, in which the first drive chain section (221a) is assigned to a first drive chain, the second drive chain section (221b) is assigned to a second drive chain, the third drive chain section (222a) is assigned to a third drive chain, and the fourth drive chain section (222b) is assigned to a fourth drive chain.

6. Vehicle drive system according to one of Claims 1 to 5, in which the circulating drive chains (221a, 221b, 222a, 222b) each extend over a plane which is parallel to the plane of the roadway.

7. Vehicle drive system according to one of Claims 1 to 5, in which the circulating drive chains (221a, 221b, 222a, 222b) each extend over a plane which is perpendicular to the plane of the roadway.

8. Vehicle drive system according to one of Claims 1 to 7, in which
the circulating drive chains (221a, 221b, 222a, 222b) are operated synchronously with respect to one another.

9. Vehicle drive system according to one of Claims 1 to 8, in which
two overlapping, circulating drive chains (221a, 222a) are coupled by means cardan shafts.

10. Vehicle drive system according to one of Claims 1 to 9, in which
at least one flywheel which is connected to a drive chain motor (231-238) is provided for compensating fluctuations in load torque.

11. Vehicle drive system according to one of Claims 1 to 10, in which
at least one gear wheel (215a - 218b) engages in a drive chain in a positive locking fashion.

12. Vehicle drive system according to one of Claims 1 to 11, in which
at least one brake device (111, 121) is configured as an eddy current brake.

13. Vehicle drive system according to one of Claims 1 to 12, in which
at least one brake device (111, 121) is configured as a DC motor which feeds back into a power system and/or battery system.

14. Vehicle drive system according to one of Claims 1 to 13, in which
at least one brake device (111, 121) is configured as a three-phase motor which feeds back into a power system and/or battery system.

15. Vehicle drive system according to one of Claims 1 to 14, in which
at least one brake device (111, 121) can be regulated in infinitely variable fashion with respect to its braking torque between idling and full braking torque.

## Revendications

1. Système d'entraînement d'un véhicule comprenant
- au moins une chaîne (221a - 221b, 222a - 222b ) d'entraînement mobile en tournant le long d'un premier tronçon de trajet,
- un premier groupe ( 211 ) d'entraînement prévu sur le véhicule et ayant une roue (215a) dentée engrenant une première section ( 211a ) de chaîne d'entraînement et un dispositif ( 111, 121 ) agissant sur la roue ( 215a ) dentée,
- un deuxième groupe ( 213 ) d'entraînement prévu sur le véhicule et dont la roue ( 216a ) dentée engrène dans un tronçon ( 221b ) de chaîne d'entraînement mobile en sens contraire au premier tronçon de chaîne d'entraînement le long du premier tronçon du trajet,
**caractérisé en ce que**
- il est prévu au moins une autre chaîne ( 222a - 222b ) d'entraînement mobile en tournant le long d'un deuxième tronçon de trajet,
- la au moins une autre chaîne ( 222a - 222b ) d'entraînement s'étend dans une zone de transition du premier tronçon et du deuxième tronçon de trajet chevauchant la chaîne ( 222a - 222b ) d'entraînement mobile le long du premier tronçon de trajet,
- le premier groupe ( 211 ) d'entraînement a une roue ( 215b ) dentée, qui engrène avec un troisième tronçon ( 222a ) de chaîne d'entraînement associée à la au moins une autre chaîne ( 222a - 222b ) d'entraînement,
- le deuxième groupe ( 213 ) d'entraînement a une roue ( 216b ) dentée, qui engrène avec un quatrième tronçon ( 222b ) de chaîne d'entraînement mobile en sens contraire au troisième tronçon ( 222a ) de chaîne d'entraînement le long du deuxième tronçon de trajet.

2. Système d'entraînement de véhicule suivant la revendication 1, dans lequel le premier groupe ( 211 ) d'entraînement a deux roues ( 215a, 215b ) dentées disposées sur un axe pour engrener avec le premier et le troisième tronçons ( 221a, 222a ) de chaîne d'entraînement et le deuxième groupe d'entraînement a deux roues ( 216a, 216b ) dentées disposées sur un axe pour engrener avec le deuxième et le quatrième tronçons ( 221b, 222b ) de chaîne d'entraînement.

3. Système d'entraînement de véhicule suivant la revendication 1, dans lequel le premier groupe ( 211 ) d'entraînement a une roue ( 215a, 215b ) coulissant axialement pour engrener avec le premier et le troisième tronçons ( 221a, 222a ) de chaîne d'entraînement et le deuxième groupe ( 213 ) d'entraînement a une roue ( 216a, 216b ) dentée coulissant axialement pour engrener avec le deuxième et le quatrième tronçons ( 221b 222b ) de chaîne d'entraînement.

4. Système d'entraînement de véhicule suivant l'une des revendications 1 à 3, dans lequel le premier et le deuxième tronçons ( 221a, 221b ) de chaîne d'entraînement sont associés à une première chaîne ( 221a, 221b ) d'entraînement et le troisième et le quatrième tronçons ( 222a, 222b ) de chaîne d'entraînement sont associés à une deuxième chaîne ( 222a, 222b ) d'entraînement.

5. Système d'entraînement de véhicule suivant l'une des revendications 1 à 3, dans lequel le premier tronçon ( 221a ) de chaîne d'entraînement est associé à une première chaîne d'entraînement, le deuxième tronçon ( 221b ) de chaîne d'entraînement est associé à un deuxième chaîne d'entraînement, le troisième tronçon ( 222a ) de chaîne d'entraînement est associé à une troisième chaîne d'entraînement et le quatrième tronçon ( 222b ) de chaîne d'entraînement est associé à une quatrième chaîne d'entraînement.

6. Système d'entraînement de véhicule suivant l'une des revendications 1 à 5, dans lequel les chaînes ( 221a, 221b, 222a, 222b ) d'entraînement qui tournent s'étendent sur respectivement un plan parallèle au plan du trajet.

7. Système d'entraînement de véhicule suivant l'une des revendications 1 à 5, dans lequel les chaînes ( 221a, 221b, 222a, 222b ) d'entraînement qui tournent s'étendent sur respectivement un plan perpendiculaire au plan du trajet.

8. Système d'entraînement de véhicule suivant l'une des revendications 1 à 7, dans lequel
les chaînes ( 221a, 221b, 222a, 222b ) d'entraînement qui tournent sont entraînés en synchronisme les unes par rapport aux autres.

9. Système d'entraînement de véhicule suivant l'une des revendications 1 à 8, dans lequel
deux chaînes ( 221a, 222a ) d'entraînement qui tournent en se chevauchant sont couplées par des arbres à la cardan.

10. système d'entraînement de véhicule suivant l'une des revendications 1 à 9, dans lequel
il est prévu au moins un volant relié à un moteur ( 231 à 238 ) de chaîne d'entraînement pour compenser des fluctuations du type de charge.

11. Système d'entraînement de véhicule suivant l'une des revendications 1 à 10, dans lequel
au moins une roue ( 215a à 218b ) dentée engrène par complémentarité de forme dans une chaîne d'entraînement.

12. Système d'entraînement de véhicule suivant l'une des revendications 1 à 11, dans lequel
au moins un dispositif ( 111, 121 ) de frein est conformé en frein à courant de Foucault.

13. Système d'entraînement de véhicule suivant l'une des revendications 1 à 12, dans lequel
au moins un dispositif ( 111, 121 ) de frein est conformé en moteur à courant continu réalimentant un réseau de courant ou un système de batterie.

14. Système d'entraînement de véhicule suivant l'une des revendications 1 à 13, dans lequel
au moins un dispositif ( 111, 121 ) de frein est conformé en moteur à courant alternatif réalimentant un réseau de courant et/ou un système de batterie.

15. Système d'entraînement de véhicule suivant l'une des revendications 1 à 14, dans lequel
au moins un dispositif ( 111, 121 ) de frein peut être régulé progressivement du point de vue de son couple de freinage entre la marche à vide et le couple de freinage complet.
